# EUROPEAN PATENT APPLICATION

(11) **EP 2 676 539 A2**
(43) Date of publication of application: **25.12.2013**
(21) Application number: 13187750.8
(22) Date of filing: 08.10.2013
(51) Int. Cl.: A01G 3/00

(54) **Device for crushing roots in a container**

(71) Applicant: Ileri, Kadir, 5046 AX Tilburg (NL)
(72) Inventor: Ileri, Kadir, 5046 AX Tilburg (NL); Kempenaar, Giliano, 4826 BA Breda (NL)
(74) Representative: Doolaar, Frans

(57) **Abstract**

The invention relates to a device (1) for crushing roots (20) in a container (18) comprising a shaft (2) arranged to be rotated around a rotation axis (3) by driving a driving end (4). The device also comprises a rotor (6) arranged at a driven end (5) of the shaft (2) and arranged to crush material when rotating. The device further comprises a shield (8) delimiting a shielded space (22) around the shaft (2), the shield (8) comprising an opening with an area (21) facing away from the driving end (4), the shielded space (22) being further delimited by the area (21) of the opening.

The shield (8) is arranged to be moved along the direction of the rotation axis (3) over a range of positions comprising an operational position wherein the rotor (6) is at least partially further away from the driving end (4) than the area (21).

## Description

### Technical field

The invention relates to a device for crushing roots in a container comprising
- a shaft arranged to be rotated around a rotation axis by driving a driving end;
- a rotor arranged at a driven end of the shaft and arranged to crush material when rotating; and
- a shield delimiting a shielded space around the shaft, the shield comprising an opening with an area facing away from the driving end, the shielded space being further delimited by the area of the opening.

### Background

DE2163463A1 describes a multipurpose device for use in the garden to cut materials. A motor housing for an electromotor drives a shaft. A rotor is rotably driven by the shaft. A cone shaped shield is fixedly attached to the housing. A flange shaped part of the shield extends around the rotor.

When this device is used to crush material in a cup for plants such as roots, the flange needs to be pressed into the material in order for the rotor to reach material to be crushed. However, the material at the position of the flange may be compact or there may be roots in the way of the flange and pressing the flange into the material may be difficult and require much force or may even be impossible for a normal operator. With much force being exerted, the shield may be damaged or needs to be stronger than needed for shielding purposes.

US26884532A describes an electric drill motor housing with a motor within and with a hedge or lawn trimmer attachment. A shank end of a shaft is mounted in a chuck driven by the motor. A rotor with diametrically opposite sharpened edges is placed with a central shaft receiving aperture over the other end of the shaft. The rotor is secured by nuts on either side of the rotor engaging with a thread of the shaft.

The shaft protrudes through a central opening of a cone shaped part of a shield comprising a bearing. At two diametrically opposed position there are pairs of aperture ears attached to the cone shaped part of the shield facing in the direction of the motor housing. Attaching arms are pivotably connected to the shield. The other ends of the attaching arms are pivotably connected between pairs of ears integrally secured on a metal strap. The strap is secured on the motor housing.

The shield ends in a flange, which is formed as a sector of a hollow cylindrical wall. The flanged partially surrounds the rotor and the diameter of the inner surface of the cylinder is larger than the diameter of the rotor.

The sector where the flange is not present corresponds to an arc of the shield having a plurality of indented serrated teeth. The diameter of the shield at the indentations is less than the diameter of the rotor. As there is no flange in that sector, the rotor protrudes out of the inner space delimited by the cone shaped part of the shield and the flange. The flange is to protect the operator from injury.

US26884532A teaches to use this device sideways with respect to the shaft such that the arc of the shield is the place where the cutting takes place.

When this device is used to crush material in a cup for plants, the rotor will enter the material only until the teeth and the flange do not come into contact with the material or as long as those can be pressed into the material, which may be difficult.

It is an object of the invention to provide a device which at least partially solves or mitigates these problems. According to an embodiment of the invention, there is provided a device for crushing roots in a container comprising:
- a shaft arranged to be rotated around a rotation axis by driving a driving end;
- a rotor arranged at a driven end of the shaft and arranged to crush material when rotating;
- a shield delimiting a shielded space around the shaft, the shield comprising an opening with an area facing away from the driving end, the shielded space being further delimited by the area of the opening;
**characterized in that** the shield is arranged to be moved along the direction of the rotation axis over a range of positions comprising an operational position wherein the rotor is at least partially further away from the driving end than the area.

Because the shield is moveable in the direction of the rotation axis to an operational position wherein the rotor is at least partially further away from the driving end than the area of the opening, the shield does not have to enter the material to be crushed. Therefore, the device can be handled with less force (and more accuracy) and with less chance on failure or damage to the device. The larger part of the rotor that is further away from the driving end than the area, the deeper the rotor can crush the material without the shield having to enter the material.

Herein container encompasses cups and pots for plants.

According to an embodiment of the invention, a device according to claim 2 is provided.

As the shaft comprises a part which is between the rotor and the area when the shield is in the operation position, the complete rotor is further away from the driving end than the area. Therefore the rotor can travel into the material relatively deep without the shield having to enter the material.

According to an embodiment of the invention, a device according to claim 3 is provided.

The advantage of this embodiment is that the shield in this case provides maximal protection to the rotor.

According to an embodiment of the invention, a device according to claim 4 is provided.

The advantage of the entry part projecting away from the driving end is that in use it protrudes to the material to be crushed. When brought into contact with the material to be crushed, rotation of the rotor than makes the entry part to cut into the material to destroy it.

According to an embodiment of the invention, a de device according to claim 5 is provided.

The advantage of having the entry part and the one or more additional entry parts at unique distances from the rotation axis is that material at all these unique distances from the rotation axis can be cut to destroy it.

According to an embodiment of the invention, a de device according to claim 6 is provided.

By maintaining a minimum distance between the housing and the housing of a driving apparatus, the travelling distance of the entry part into the material may be limited. This can be used to advantage to prevent the entry part (or as the case may be also the additional entry parts) to protrude to deep into the material reaching a cup or container around the material. When the entry part (or as the case may be the additional entry parts) would reach the cup or container around the material, that cup or container may be damaged or the rotor may be damaged or loos sharpness.

According to an embodiment of the invention, a de device according to claim 7 is provided.

Because the further rotor has a larger radius than the rotor, material closer to the rotation axis than the second radius and further away than the first radius, can be crushed by the further rotor. As the rotor can not reach this material, it will not crush this material on passing. This is advantageous in case the material to be crushed is in a cup or container with a relatively wide opening and a smaller base. In such a case the rotor may enter the material relatively deep without hitting the cup or container. The further rotor than crushes the material closer to the wide opening to a further distance from the rotation axis.

According to an embodiment of the invention, a device according to claim 8 is provided.

Because the second entry part projects away from the driving end, in use it protrudes into material to be crushed. As it protrudes material at a distance from the rotation axis larger than the radius of the rotor, it has a unique position and it makes that the further rotor it cuts into previously not crushed material.

According to an embodiment of the invention, a device according to claim 9 is provided.

When the flange abuts the edge of the container, the rotor can enter into the container, while the shield moves backward (i.e. in the direction of the driving end) with respect to the shaft and rotor. The advantage of the flange is that the shield does not have to be positioned accurately on the edge or may accommodate edges of different shapes or dimensions.

According to an embodiment of the invention, a device according to claim 10 is provided.

The indicator may remind a user that it is safe to place a foot on the shield or even may clarify to the user that placement of a foot on the shield is safe. Without the indicator the user may believe it best to keep his feet as far away as possible from the rotor or as the case may be the further rotor.

Examples of embodiments the invention will now be described with reference to the accompanying schematic drawings. Corresponding reference symbols in the schematic drawings indicate corresponding parts. The schematic drawings are not necessarily to scale and certain features may be exaggerated to better illustrate and explain the present invention. Further, the examples are not intended to be exhaustive or otherwise limit or restrict the invention to the precise configurations shown in the drawings and disclosed in the following detailed description.
Figure 1 depicts a cross section of a device according to the invention
Figure 2 depicts a rotor of a device according to the invention

### Detailed description

For the purpose of explaining the invention a right-handed, orthogonal axis system will be used with an x-axis, a y-axis and a z-axis and corresponding x-coordinates, y-coordinates and z-coordinates. One axis system is used for all figures.

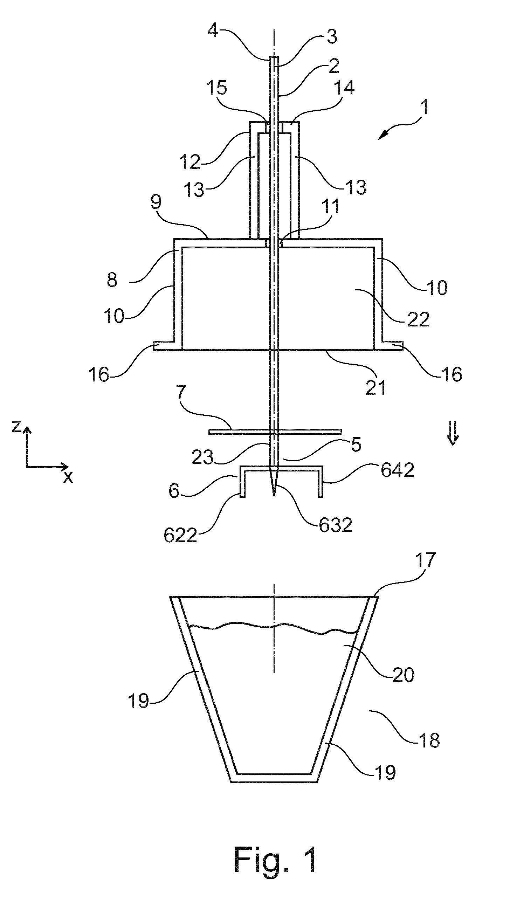

A device (1) according to the invention comprises a shaft (2) having an axis of symmetry (3) that extends along the z-axis **(****figure 1****).** In use the axis of symmetry (3) serves as a rotation axis for the shaft (2). The shaft (2) may be made from steel. The shaft comprises a driving end (4). The driving end (4) may be a shank for fitting in and cooperating with the jaws of a chuck of a motor drill.

The other end of the shaft (2) is a driven end (5). A rotor (6) is attached to the driven end (5). The rotor (6) may be made from steel. The rotor (6) may be made from sheet material.

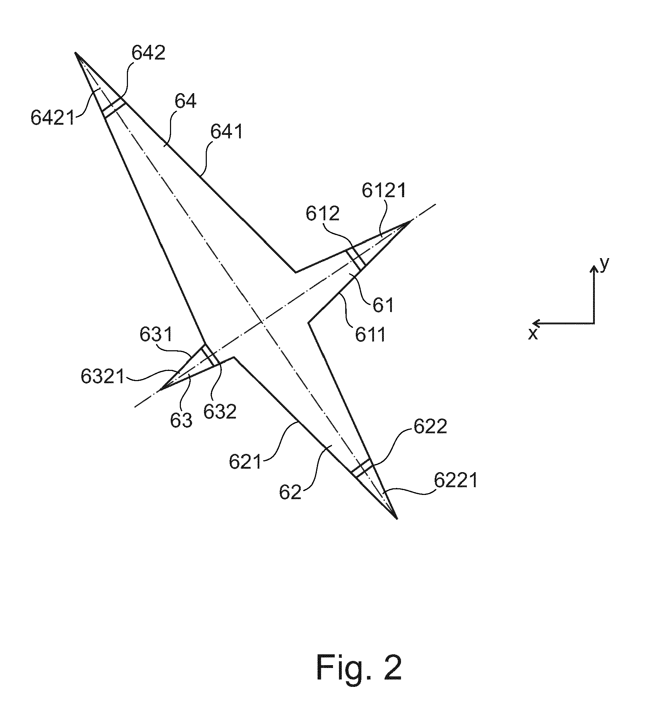

The rotor (6) as seen by an observer looking in positive z-direction has 4 teeth: a first tooth (61), a second tooth (62), a third tooth (63) and a forth tooth (64) **(****figure 2****).** The teeth all have unique lengths, i.e. they each extend to a different distance from the rotation axis (3). The rotor (6) may be made by forming triangular shaped teeth with relative positions and orientations such that the rotor (6) has a star shape. Neighbouring teeth, such as the first tooth (61) and the second tooth (62) but not the second tooth (62) and the forth tooth (64), have a difference in orientation of 120 degrees.

The first tooth (61) has a first leading edge (611). This first leading edge (611) leads in case of clockwise rotation of the shaft (2) and rotor (6). The skilled person will appreciate that leading means that the first leading edge (611) is the first part of the first tooth (61) to reach a certain angular position in case of clockwise rotation of the shaft. The skilled person will also appreciate that the clockwise rotation is referred to with reference to **figure 2**. This means that the first leading edge (611) rotates from the x-direction to the y-direction by rotating 90 degrees. In counter-clockwise direction it would rotate by 270 degrees between the x-direction and the y-direction.

The first leading edge (611) may be sharpened such that the first tooth (61) may act as a blade- or knive-like element. Similarly the second tooth (62) comprises a second leading edge (621), the third tooth (63) comprises a third leading edge (631) and the forth tooth (64) comprises a forth leading edge (641). The second leading edge (621), the third leading edge (631) and the forth leading edge (641) each lead their corresponding tooth when the rotor (6) is rotated in the clockwise direction direction. The second leading edge (621), the third leading edge (631) and the forth leading edge (641) may all be sharpened analogue to the first leading edge (611).

Similarly the trailing edges of the teeth, i.e. the edges that reach a certain angular position last in case of clockwise rotation of the shaft, are also sharpened.

After sharpening the first leading edge (611), the second leading edge (621), the third leading edge (631) and the forth leading edge (641) as well as the trailing edges, equal lengths of the tips (6121, 6221, 6321 and 6421) of the teeth are bent towards the negative z-direction. In this direction the bend parts face away from the driving end (4). The bend parts from entry parts (612,622,632,642) for entering material to be cut. As the 4 teeth (61,62,63,64) each extended to a different distance from the rotation axis and as equal lengths of the tips are bend, the entry parts (612,622,632,642) have unique distances to the rotation axis (3). The position of the entry part (642) of the forth tooth (64) has the largest distance to the rotation axis (3) and determines the radius of the rotor (6). **Figure 2** shows the entry parts (612,622,632,642) after before bending and the tips (6121, 6221, 6321 and 6421) as ghost view before bending.

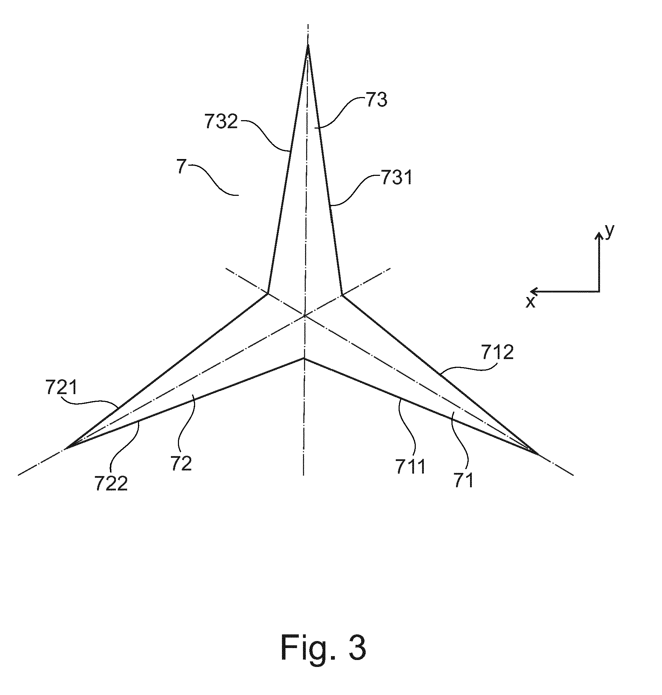

The device (1) comprises a further rotor (7) **(****figure 3****)** extending in radial direction with respect to the shaft (2), i.e. in the x-y plane of the drawings. The further rotor is star-shaped in the x-y plane. The further rotor (7) comprises a first further tooth (71), a second further tooth (72) and a third further tooth (73). The first further tooth (71), the second further tooth (72) and the third further tooth (73) are all triangular shaped and neighbouring teeth have a difference in orientation of 120 degrees. The first further tooth (71) has a first further leading edge (711), which is sharpened. The first further tooth (71) has a first further trailing edge (712), which is sharpened as well. Similarly the second further tooth (72) has a second further leading edge (721) and a second further trailing edge (722) that are both sharpened. Similarly the third further tooth (73) has a third further leading edge (731) and a third further trailing edge (732) that are both sharpened.

The device (1) further comprises a shield (8) with a box shape. The shield (8) comprises a radial wall (9) and tangential walls (10). The radial wall (9) comprises a central opening (11) through which the shaft (2) protrudes. The inner dimensions of the shield (8) are such that it can be placed over both the rotor (6) and the further rotor (7). The shield (8) further comprises an opening with an area (21) facing away from the driving end (4). The radial wall (9), the tangential walls (10) and the area (21) delimit a shielded space (22).

A distance holder (12) is attached to the radial wall (9). The distance holder is U-shaped and has two legs (13) extending parallel to the rotation axis (3) and a connecting part (14) extending perpendicular to the rotation axis (3) forming a connection between two ends of the legs (13). The connecting part (14) may be welded to the legs (13). The ends of the legs (13) furthest away from the connecting part (14) are each connected to the radial wall (9), for instance by welding. The connecting part (14) comprises a central hole (15) through which the shaft (2) protrudes.

In use a motor having a housing part is used to drive the shaft (2) at the driving end (4). The surface of the connecting part (14) facing the driving end (4) will abut the housing part after travelling along the shaft over a certain distance in the direction of the driving end (4). In that position the shield is in an operational position and the rotor (6) and the further rotor (7) engage with material to be crushed (20).

The shield (8) comprises flanges (16) on two opposing sides. The flanges (16) extend radially outward (i.e. in the x-direction). In use the flanges (16) abut an edge (17) of a container (18). The container (18) has a tapered shaped in that the side walls (19) are oriented such that on the top side there is a large opening, but lower into the container (18) the walls are closer together. In use the container (18) comprises earth and roots or even a clod to be crushed.

The radial wall (9) further comprises an indicator (not shown) for placement of a foot of a user. The indicator may be a foot print painted on the surface of the radial wall (9) facing the driving end (4).

### Use

In use the driving end (4) of the shaft (2) is for instance inserted in a chuck of a hand held motor drill comprising an electrically driven motor. A user handles the motor. The device (1) is placed over the large opening on the top side of the container (18) with the rotation axis (3) parallel to the force of gravity. The shield is lowered (i.e. has its smallest z-coordinate). In this position the radial wall (9) may be supported by the further rotor (7). Both the rotor (6) and the further rotor (7) are completely within the shielded space (22). This is a non-operational position.

The device (1) is lowered (indicated in **figure 1** by the double arrow), i.e. moved in the negative z-direction and the flanges (16) abut the edge (17) of the container (18). The device (1) is lowered further while the shield (8) is supported by the edge (17). The user places a foot on the indicator on the radial wall (9) of the shield (8). This does not only stabilise the shield (8), but also the container (18). The motor is activated to drive the shaft (2), rotor (6) and further rotor (7) rotationally around the rotation axis (3). The shield (8) is not driven by the motor.

The device (1) is lowered further and the rotor (6) passes the area (21) completely. After lowering the device further the rotor (6) comes into contact with the material (20). The entry parts (612,622,632,642) then cut the material and this makes an operational position. For making contact with the material (20) the user may rely on gravity, but he may also push the device (1) down actively by pushing the motor. As the rotor (6) was lowered further after completely passing the area (21), the rotor (6) is further away from the driving end (4) than the area (21). As the rotor (6) was lowered further after completely passing the area (21) the shaft comprises a part (23) between the rotor and the area (21).

When the rotor (6) crushes material (20), some of the material (20) may be swung around. The shield (8) now also acts as a bouncing element against which that material may bounce and fall back into the container (18). Apart from that the shield (8) protects external objects or parts of the user from coming into the shielded space (22) and to fall into the container (18) and the material (20) where it may be crushed.

After the rotor (6) has travelled into the material (20) the further rotor (7) reaches the material and starts to cut into the material. Again this makes an operational position.

Before the entry parts (612,622,632,642) reach the bottom of the container (18), the surface of the connecting part (14) facing the driven end (4) abuts the motor. In such a case the rotor (6) has reached its maximum distance to the area (21) outside the shielded space (22). This is an extreme operational position.

It will be appreciated by the skilled person that variations of the device may still be embodiments of the invention. For instance, the further trailing edges may not be sharpened. Also the central opening (11) of the shield (2) may comprise a bearing. Further, the flanges may form a conical shape and may extend towards the rotation axis (in stead of away from the rotation axis) and the shield may be cylindrical or conical.

Also the rotor (6) may already come into contact and start crushing the material (20) while it has not completely passed the area (21). In such a case, the rotor (6) is partially further away from the driving end (4) than the area (21).

## Claims

1. Device (1) for crushing roots (20) in a container (18) comprising:
- a shaft (2) arranged to be rotated around a rotation axis (3) by driving a driving end (4);
- a rotor (6) arranged at a driven end (5) of the shaft (2) and arranged to crush material when rotating;
- a shield (8) delimiting a shielded space (22) around the shaft (2), the shield (8) comprising an opening with an area (21) facing away from the driving end (4), the shielded space (22) being further delimited by the area (21) of the opening; **characterized in that** the shield (8) is arranged to be moved along the direction of the rotation axis (3) over a range of positions comprising an operational position wherein the rotor (6) is at least partially further away from the driving end (4) than the area (21).

2. Device (1) according to claim 1, wherein the shaft (2) comprises a part (23) which is between the rotor and the area (21) when the shield (8) is in the operational position.

3. Device (1) according to claim 1 or 2, wherein the range comprises a position wherein the rotor (6) is completely within the shielded space (22).

4. Device (1) according to claim 1, 2 or 3, wherein the rotor (6) comprises an entry part (612,622,632,642) projecting away from the driving end (4).

5. Device (1) according to claim 5, comprising one or more additional entry parts (612,622,632,642) projecting away from the driving end (4), the entry part (612,622,632,642) and the one or more additional entry parts (612,622,632,642) each being at a unique distance from the rotation axis (3).

6. Device (1) according to claim 4 or 5, comprising a distance holder (12) arranged to maintain a minimum distance between a housing of a driving apparatus used for driving the device (1) and the shield (8).

7. Device (1) according to any of the claims 1 to 6, wherein the rotor (6) has a first radius and the device (1) comprises a further rotor (7) arranged between the rotor (6) and the driving end (4), the further rotor (7) having a second radius larger than the first radius.

8. Device (1) according to claim 7, wherein the further rotor (7) comprises a further entry part projecting away from the driving end (4) arranged at a distance from the rotation axis (3) larger than the radius of the rotor (6).

9. Device (1) according to any of the preceding claims for crushing roots in a container the container comprising an edge around a container opening and wherein the shield (8) comprises a flange (16) arranged to abut the edge of the container.

10. Device (1) according to any of the preceding claims, wherein the shield (8) comprises an indicator for placement of a foot of a user.
